# EUROPEAN PATENT APPLICATION

(11) **EP 4 429 300 A1**
(43) Date of publication of application: **11.09.2024**
(21) Application number: 22889276.6
(22) Date of filing: 01.11.2022
(51) Int. Cl.: H04W 16/02, H04W 52/02

(54) **PEI DETECTION METHOD AND APPARATUS, RECEIVING TIME DETERMINING METHOD AND APPARATUS, DEVICE AND MEDIUM**

(30) Priority: 04.11.2021 CN 202111302371
(71) Applicant: Vivo Mobile Communication Co., Ltd., Dongguan, Guangdong 523863 (CN)
(72) Inventor: LI, Dongru, Dongguan, Guangdong 523863 (CN); SHEN, Xiaodong, Dongguan, Guangdong 523863 (CN); WU, Kai, Dongguan, Guangdong 523863 (CN)
(74) Representative: Murgitroyd & Company
(86) International application number: PCT/CN2022/129041
(87) International publication number: WO 2023/078253

(57) **Abstract**

This application discloses a PEI detection method and apparatus, a receiving time determining method, a device and a medium, and belongs to the technical field of communications. The PEI detection in the embodiments of this application includes: broadcasting, by a network side device, a configuration parameter related to a paging early indication occasion (PEI-O) (201).

## Description

### CROSS-REFERENCE TO RELATED APPLICATION

This application claims the priority to Chinese Patent Application No. 202111302371.1 filed in China on November 04, 2021, the entire content of which is hereby incorporated by reference.

### TECHNICAL FIELD

This application belongs to the technical field of communications, and specifically relates to a PEI detection method, a receiving time determining method and apparatus, a device and a medium.

### BACKGROUND

At present, for user equipment (User Equipment, UE) in an idle state, the UE needs to perform radio resource management (Radio Resource Management, RRM) measurement and receive a paging physical downlink control channel (paging Physical Downlink Control Channel, paging PDCCH).

In the related art, in order to reduce power consumption of the UE, the UE needs to detect and receive paging early indication (PEI) in a paging early indication occasion (Paging Early Indication occasion, PEI-O) before receiving the paging PDCCH. However, current standards have not yet determined how to configure design of the PEI-O for the UE.

### SUMMARY

Embodiments of this application provide a PEI detection method and apparatus, a receiving time determining method, a device and a medium, which can solve a problem about how to configure a PEI-O.

In a first aspect, a PEI detection method is provided, and includes: configuring a configuration parameter by a network side device; and broadcasting, by the network side device, a configuration parameter related to a paging early indication occasion (PEI-O).

In a second aspect, a PEI detection apparatus is provided, and includes: a broadcasting module, configured to broadcast a configuration parameter related to a paging early indication occasion (PEI-O).

In a third aspect, a network side device is provided, and includes a processor, a memory, and a program or an instruction stored in the memory and executable on the processor, wherein when the program or the instruction is executed by the processor, steps of the method as described in the first aspect are implemented.

In a fourth aspect, a network side device is provided, and includes a processor and a communication interface, where the communication interface is configured to broadcast a configuration parameter related to a paging early indication occasion (PEI-O).

In a fifth aspect, a PEI detection method is provided, and includes: obtaining a configuration parameter by a terminal, the configuration parameter being related to a PEI-O; and determining, by the terminal, PEI-O information associated with a PO corresponding to the terminal according to the configuration parameter.

In a sixth aspect, a PEI detection apparatus is provided, and includes: an obtaining module, configured to obtain a configuration parameter, the configuration parameter being related to a PEI-O; and a determining module, configured to determine PEI-O information associated with a PO corresponding to a terminal according to the configuration parameter.

In a seventh aspect, a terminal is provided, and includes a processor, a memory, and a program or an instruction stored in the memory and executable on the processor, wherein when the program or the instruction is executed by the processor, steps of the method as described in the fifth aspect are implemented.

In an eighth aspect, a terminal is provided, and includes a processor and a communication interface, where the communication interface is configured to obtain a configuration parameter, and the configuration parameter is related to PEI; and the processor is configured to determine PEI-O information associated with a PO corresponding to the terminal according to the configuration parameter.

In the PEI detection method provided by this embodiment of this application, since the network side device may broadcast the configuration parameter related to the PEI-O, after the terminal obtains the configuration parameter, the terminal may determine the corresponding PEI-O information according to the configuration parameter.

In a ninth aspect, a reference signal receiving time determining method is provided, and includes: receiving first tracking reference signal (TRS) transmission information by a terminal; and receiving a TRS within a first time period by the terminal according to an available TRS resource indicated by the first TRS transmission information; where the first TRS transmission information is carried in second DCI, the second DCI includes paging early indication (PEI), and the first time period is a time period corresponding to the first TRS transmission information.

In a tenth aspect, a reference signal receiving time determining apparatus is provided, and includes a receiving module, configured to receive first TRS transmission information; and receive a TRS within a first time period according to an available TRS resource indicated by the first TRS transmission information; where the first TRS transmission information is carried in second DCI, the second DCI includes paging early indication (PEI), and the first time period is a time period corresponding to the first TRS transmission information.

In an eleventh aspect, a terminal is provided, and includes a processor, a memory, and a program or an instruction stored in the memory and executable on the processor, wherein when the program or the instruction is executed by the processor, steps of the method as described in the ninth aspect are implemented.

In a twelfth aspect, a terminal is provided, and includes a processor and a communication interface, where the communication interface is configured to receive first TRS transmission information; and receive a TRS within a first time period according to an available TRS resource indicated by the first TRS transmission information; where

According to the reference signal receiving time determining method provided by this embodiment of this application, the terminal may receive the corresponding TRS within the first time period according to the available TRS resource indicated by the first TRS transmission information.

In a thirteenth aspect, a readable storage medium is provided, storing a program or an instruction, wherein when the program or the instruction is executed by a processor, steps of the method as described in the first aspect are implemented, or steps of the method as described in the fifth aspect are implemented, or steps of the method as described in the ninth aspect are implemented.

In a fourteenth aspect, a chip is provided, including a processor and a communication interface, the communication interface being coupled with the processor, and the processor being configured to run a program or an instruction to implement the method as described in the first aspect, or implement the method as described in the fifth aspect, or implement the method as described in the ninth aspect.

In a fifteenth aspect, a computer program/program product is provided, and stored in a storage medium, the program/program product being executed by at least one processor so as to implement steps of the method as described in the first aspect, the fifth aspect, or the ninth aspect.

### BRIEF DESCRIPTION OF THE DRAWINGS

FIG. 1 is a schematic architectural diagram of a possible communication system provided by this embodiment of this application.
FIG. 2 is a first schematic flowchart of a PEI detection method provided by this embodiment of this application.
FIG. 3 is a first schematic diagram of parameter configuration provided by this embodiment of this application.
FIG. 4 is a second schematic diagram of parameter configuration provided by this embodiment of this application.
FIG. 5 is a third schematic diagram of parameter configuration provided by this embodiment of this application.
FIG. 6 is a second schematic method flowchart of a PEI detection method provided by this embodiment of this application.
FIG. 7 is a fourth schematic diagram of parameter configuration provided by this embodiment of this application.
FIG. 8 is a schematic diagram of a DRX cycle provided by this embodiment of this application.
FIG. 9 is a schematic method flowchart of a reference signal receiving time determining method provided by this embodiment of this application.
FIG. 10 is a first schematic structural diagram of a PEI detection apparatus provided by this embodiment of this application.
FIG. 11 is a second schematic structural diagram of a PEI detection apparatus provided by this embodiment of this application.
FIG. 12 is a schematic structural diagram of a reference signal receiving time determining apparatus provided by this embodiment of this application.
FIG. 13 is a schematic diagram of a hardware structure of a communication device provided by this embodiment of this application.
FIG. 14 is a schematic diagram of a hardware structure of a terminal provided by this embodiment of this application.
FIG. 15 is a schematic diagram of a hardware structure of a network side device provided by this embodiment of this application.

### DETAILED DESCRIPTION

The technical solutions in embodiments of this application will be clearly described in the following with reference to the accompanying drawings in the embodiments of this application. Apparently, the described embodiments are some rather than all of the embodiments of this application. All other embodiments obtained by those ordinarily skilled in the art based on the embodiments in this application fall within the protection scope of this application.

It is worth pointing out that technologies described in this embodiment of this application are not limited to a long term evolution (Long Term Evolution, LTE) LTE/LTE-advanced (LTE-Advanced, LTE-A) system, and may further be applied to other wireless communication systems such as a code division multiple access (Code Division Multiple Access, CDMA), a time division multiple access (Time Division Multiple Access, TDMA), a frequency division multiple access (Frequency Division Multiple Access, FDMA), an orthogonal frequency division multiple access (Orthogonal Frequency Division Multiple Access, OFDMA), a single-carrier frequency-division multiple access (Single-carrier Frequency-Division Multiple Access, SC-FDMA), and other systems. Terms "system" and "network" described in this embodiment of this application are often interchangeably used, and the described technologies may be used not only for the systems and radio technologies mentioned above, but also for other systems and radio technologies. The following description describes a new radio (New Radio, NR) system for an example purpose, and the term NR is used in most of the following descriptions. However, these technologies may also be applied to applications except for an NR system application, such as a 6^{th} generation (6th Generation, 6G) communication system.

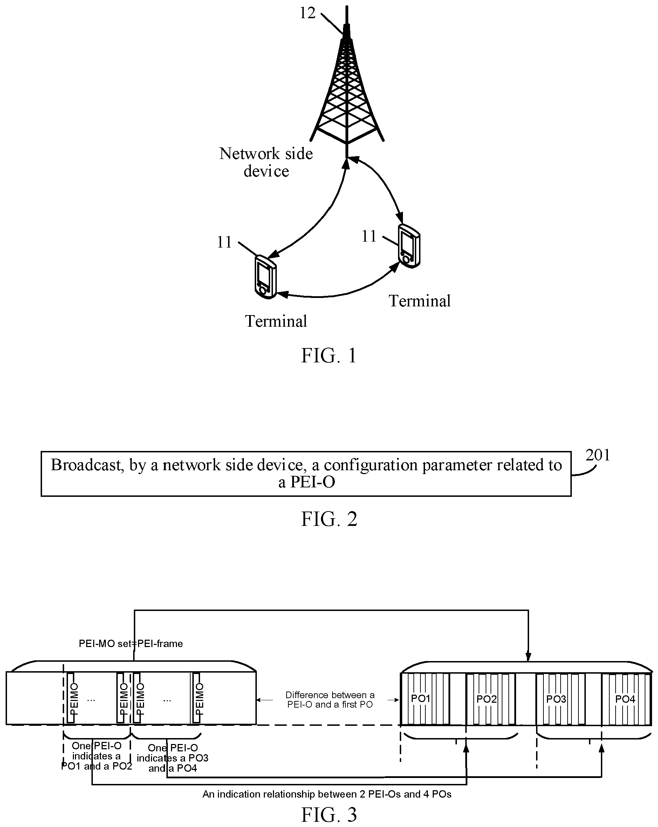

FIG. 1 shows a block diagram of a wireless communication system to which this embodiment of this application is applicable. The wireless communication system includes a terminal 11 and a network side device 12. The terminal 11 may be a mobile phone, a tablet personal computer (Tablet Personal Computer), a laptop computer (Laptop Computer) or called a notebook computer, a personal digital assistant (Personal Digital Assistant, PDA), a handheld computer, a Netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (wearable device), vehicle user equipment (VUE), pedestrian user equipment (PUE), and terminal side devices such as smart home (home devices with a wireless communication function, such as a freezer, a television, a washing machine, or furniture). The wearable device includes: a smart watch, a smart bracelet, smart headphones, smart glasses, smart jewelry (a smart bangle, a smart chain bracelet, a smart ring, a smart necklace, a smart anklet bangle, a smart anklet, etc.), a smart wristband, smart clothing, a game console, etc. It is to be noted that the specific type of the terminal 11 is not limited in this embodiment of this application. The network side device 12 may be a base station or a core network, where the base station may be referred to as a NodeB, an evolution NodeB, an access point, a base transceiver station (Base Transceiver Station, BTS), a radio base station, a radio transceiver, a basic service set (Basic Service Set, BSS), an extended service set (Extended Service Set, ESS), a B node, an evolution B node (eNB), a home B node, a home evolution B node, a WLAN access point, a WiFi node, a transmitting receiving point (Transmitting Receiving Point, TRP), or other certain suitable term in the field, and as long as the same technical effect is achieved, the base station is not limited to specific technical vocabulary. It is to be noted that, in this embodiment of this application, only the base station in the NR system is used as an example, but the specific type of the base station is not limited.

The technical terms involved by the technical solutions provided by this embodiment of this application will be illustrated below:
1) paging early indication (PEI)
2) paging frame (paging frame, PF)
3) paging occasion (paging occasion, PO)
4) paging early indication occasion (PEI occasion, PEI-O)
5) paging early indication monitoring occasion (PEI monitoring occasion, PEI- MO)

Terms "first", "second" and the like in the specification and claims of this application are used for distinguishing similar objects, but are not used for describing a specific sequence or precedence order. It is to be understood that terms used in this way are exchangeable in a proper case, so that this embodiment of this application may be implemented in an order different from the order shown or described herein. Moreover, the objects distinguished by "first" and "second" are usually of the same class and do not limit the number of objects. For example, a first object may be one or more. In addition, "and/or" in the specification and the claims represents at least one of the connected objects. The character "/" generally indicates that the associated object before and after is an "OR" relationship.

Paging early indication (PEI) detection, apparatus, a terminal and a medium provided by this embodiment of this application are illustrated below in detail through some embodiments and their application scenarios with reference to the accompanying drawings.

This embodiment of this application provides a paging early indication (PEI) detection method, and as shown in FIG. 2, the PEI detection method provided by this embodiment of this application includes the following steps:
step 201: a network side device broadcasts a configuration parameter related to a PEI-O.

In the PEI detection method provided by this embodiment of this application, since the network side device may broadcast the configuration parameter related to the PEI-O, after the terminal obtains the configuration parameter, the terminal may determine corresponding PEI-O information according to the configuration parameter.

Optionally, the configuration parameter above may be used to configure at least one of the following:
a time-domain resource occupied by a paging early indication monitoring occasion (PEI-MO) set;
a frequency-domain resource occupied by the PEI-MO set;
the PEI-MO set containing M paging early indication occasions (PEI-Os), where M is a positive integer;
indexes of the M PEI-Os;
the PEI-MO set being associated with W paging occasions (POs), where W is a positive integer;
indexes of the W POs;
a first list corresponding to the PEI-MO set, the first list being used to configure relevant parameters of the M PEI-Os; and
an association relationship between the M PEI-Os and the W POs.

It may be understood that the PEI-MO set may also be a PEI-O set.

Optionally, the time-domain resource occupied by the PEI-MO set above is L radio frames, and L is a positive integer. For example, one PEI-MO set is one radio frame.

Optionally, the W POs above are all or part of the POs included in at least one paging frame (PF). For example, the W POs must be all the POs in one PF.

Optionally, one paging frame (PF) is a radio frame.

Optionally, the first list above includes M first parameters, and the M first parameters are in one-to-one correspondence with the M PEI-Os; where each of the first parameters of one PEI-O is used to indicate a time-domain position of 1st paging early indication monitoring occasion (PEI-MO) corresponding to the PEI-O respectively.

It is to be noted that each PEI-O includes one or more paging early indication monitoring occasions (PEI-MOs), and the first PEI-MO is an earliest PEI-MO among the plurality of PEI-MOs in a time order. The paging early indication monitoring occasions (PEI-MOs) belong to physical downlink control channel monitoring occasions (PDCCH MOs).

Optionally, values of the first parameters above are determined by a reference point, and the reference point includes at least one of the following:
a starting point of the PEI-MO set; and
a 1st PO in at least one PO indicated by PEI-Os corresponding to the first parameters.

Specifically, in a case that the values of the first parameters are determined by using the 1st PO in the at least one PO indicated by its corresponding PEI-O as the reference point, it specifically refers to using a time-domain position of the first physical downlink control channel monitoring occasion (PDCCH MO) of the first PO as the reference point. The 1st PO is an earliest PO of the at least one PO in the time order.

Optionally, the number of the PEI-Os included in the PEI-MO set above is related to at least one of the following:
the number of the POs associated with the PEI-MO set; and
the number of the first parameters contained in the first list corresponding to the PEI-MO set.

Optionally, the association relationship between the M PEI-Os and the W POs above meets:
each of the M PEI-Os is used to indicate the at least one of the W POs.

Specifically, an index of the at least one PO may include at least one of the following: an index of a PF where the at least one PO is located, and an index of the at least one PO in the PF where the at least one PO is located.

It may be understood that in a case of the at least one PO belonging to different PFs, the index of the at least one PO includes an index of a PF where each of the at least one PO is located; and in a case of the at least one PO belonging to the same PF, the index of the at least one PO is the index of the at least one PO in the PF where the at least one PO is located.

Optionally, the number of the POs indicated by each of the M PEI-Os above is the same or different, and/or, one PO is only capable of being indicated by one PEI-O.

It may be understood that a sum of the number of the POs associated with the M PEI-Os is W, and W is equal to the number of the paging occasions (POs) associated with the PEI-MO set.

Optionally, the indexes of the M PEI-Os above and the indexes of the W POs above may be configured by the network side device respectively for the M PEI-Os and the W POs, or may be specified by a protocol, which is not limited by this embodiment of this application.

Example 1, as shown in FIG. 3, the network side device is configured with one PEI-MO set (i.e., the PEI-MO set above), and the time-domain resource occupied by the PEI-MO set is a radio frame. The PEI-MO set contains 2 PEI-Os. The network side device configures the PEI-MO set to be associated with all the 4 POs in one PF, a first PEI-O indicates the first two POs (i.e., PO1 and PO2) in the 4 POs, while a second PEI-O indicates the last two POs (i.e., PO3 and PO4) in the 4 POs. The network side device further configures the PEI-MO set to correspond to a first list, the first list contains respective first parameters of the two PEI-Os, and values of the first parameters are determined taking a starting point of the PEI-MO set as a reference point.

In some embodiments, in a case that the PEI-MO set includes K PEI-MOs, the paging early indication (PEI) detection method provided by this application may further include the following step 202.

Step 202: the network side device divides the K PEI-MOs into groups to obtain M groups of PEI-MOs.

A group of PEI-MOs includes the at least one PEI-MO, with K being a positive integer.

In some possible embodiments, the above step 202 may include the following step 202A or step 202B.

Step 202A: the network side device divides the K PEI-MOs into groups according to the number of the PEI-Os contained in the PEI-MO set so as to obtain the M groups of PEI-MOs.

Each group of PEI-MOs corresponds to one of the M PEI-Os.

Step 202B: the network side device divides the K PEI-MOs into groups according to the number of the first parameters contained in the first list corresponding to the PEI-MO set so as to obtain the M groups of PEI-MOs.

The PEI-MO between the time-domain positions of a first physical downlink control channel monitoring occasion (PDCCH MO) of the respectively corresponding PEI-O indicated by the two adjacent first parameters constitutes a group of PEI-MOs in the M groups of PEI-MOs.

Optionally, DCI content carried on the PEI-MO within each PEI-MO group is consistent.

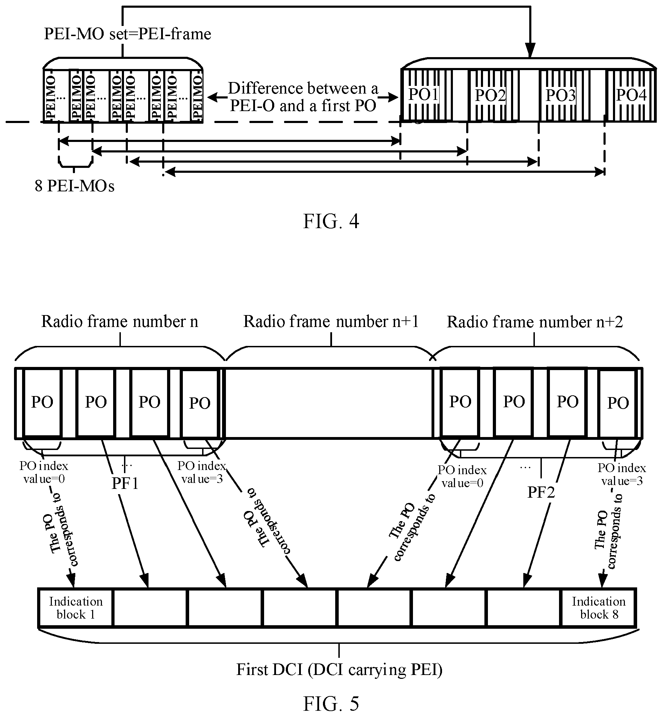

Example 2, as shown in FIG. 4, a network side is configured with one PEI-MO set, and the PEI-MO set contains 4 PEI-Os. Each PEI-O contains 8 PEI-MOs (that is, there are a total of 32 PEI-MOs in the PEI-MO set, and the PEI-MO set is divided into 4 groups); and the PEI-MO set is associated with/indicates 4 POs. The network side device configures the corresponding first parameters for the 4 PEI-Os contained in the PEI-MO set respectively, with each PEI-O indicating one PO. Values of the 4 first parameters are different. In this way, the values of the first parameters are determined by using the 1st PO in the at least one PO associated with its corresponding PEI-O as the reference point, that is, is determined by using the time-domain position of the first physical downlink control channel monitoring occasion (PDCCH MO) of the 1st PO as the reference point.

Optionally, each of the M PEI-Os above may include at least one PEI-MO. In a case that an overlap exists between the PEI-MOs respectively corresponding to the at least two of the M PEI-Os, first downlink control information (DCI) transmitted on the overlapping PEI-MOs includes: PEI information corresponding to a PO indicated by a first PEI-O, where the first PEI-O is the at least two PEI-Os, and the first DCI is used to carry PEI.

It may be understood that the first DCI refers to DCI used to carry the PEI. In addition, the first DCI may further be used to carry other indications, such as TRS transmission information, which is not limited here.

Optionally, the overlap existing between the PEI-MOs respectively corresponding to the at least two of the M PEI-Os includes: the PEI-MOs corresponding to the at least two PEI-Os partially overlap, and the PEI-MOs corresponding to the at least two PEI-Os completely overlap.

Optionally, the overlap existing between the PEI-MOs respectively corresponding to the at least two of the M PEI-Os includes: a time-domain overlap between the PEI-MOs and/or a frequency-domain overlap between the PEI-MOs.

Specifically, the overlap existing between the PEI-MOs respectively corresponding to the M PEI-Os may include the following possible situations:
(1) Due to the same value of the first parameters respectively corresponding to the at least two of the M PEI-Os, the overlap exists between the PEI-MOs respectively corresponding to the at least two PEI-Os.
(2) Even if the values of the first parameters respectively corresponding to the M PEI-Os are not the same, the PEI-MOs respectively corresponding to the at least two of the M PEI-Os may partially overlap.

Optionally, the PEI information corresponding to the PO indicated by the first PEI-O above is placed in the first DCI according to a first rule.

The first rule includes at least one of the following:
an index value of the first PEI-O;
an index value of the PO indicated by the first PEI-O; and
an index value of a PF where the PO indicated by the first PEI-O is located.

The index value of the PO indicated by the first PEI-O above may be an index value of the PO configured on the network side, or may be an index value of the PO assigned in the PF where the PO is located.

It is to be noted that the index value of the first PEI-O may be understood as the magnitude of the index value of the first PEI-O. When the first rule includes the index value of the first PEI-O, it may be understood that the first rule places the PEI information corresponding to the PO indicated by the first PEI-O in a descending order or ascending order of the index value of the first PEI-O.

It is to be noted that when the PO indicated by the first PEI-O belongs to the same PF, the first rule is the index value of the PO indicated by the first PEI-O; and when the PO indicated by the first PEI-O belongs to the different PFs, the first rule is the index value of the PO indicated by the first PEI-O and the index value of the PF where the PO indicated by the first PEI-O is located.

Exemplarily, as shown in FIG. 5, the first rule for the 4 POs belonging to a PF 1 is: from small to large or from large to small according to the magnitude of the index value of the PO; and the first rule for the 4 POs belonging to the PF1 and the 4 POs belonging to a PF2 is: from small to large or from large to small according to the magnitude of the index values of these 8 POs and the magnitude of the index values of the PF where these 8 POs are located.

It is to be noted that the PEI information corresponding to the PO (referred to as a target PO here) indicated by the first PEI-O is merged into the same DCI, that is, the PEI information corresponding to the target PO is carried through one piece of DCI (i.e., the first DCI) by default. Each target PO corresponds to one PEI information indication block in the DCI. For example, a maximum length of each indication block is 8 bits.

Exemplarily, as shown in FIG. 5, it is assumed that the target PO is the 1st PO in a PF1, i.e., the index value i_S of the PO is equal to 0, a PEI information indication block corresponding to the 1st PO in the DCI is an indication block 1.
(1) When the target PO is the PO associated with the same PF, the PEI information corresponding to each target PO is placed in the DCI according to the sequence of the index values i_S corresponding to each target PO in the PF.
(2) When the target PO is the POs associated with the different PFs, the PEI information corresponding to each target PO associated with the same PF is placed in the DCI according to the sequence of the index values i_S corresponding to each target PO in the PF; and the PEI information corresponding to the target POs associated with the different PFs is placed in the indication block in the DCI according to the sequence of the index values of the PFs.

Example 3, as shown in FIG. 5, the PEI-MO set configured by the network side device is associated with 8 POs, and these 8 POs belong to 2 PFs. In a case that the overlap exists between the PEI-MOs respectively corresponding to the PEI-Os included in the PEI-MO set, the plurality of PEI-Os corresponding to the overlapping PEI-MOs indicate these 8 POs. At this time, the PEI information of these 8 POs is carried on the DCI as shown in FIG. 5. Since these 8 POs belong to the PF1 and the PF2, the PEI information of these 8 POs may be placed on the DCI according to the index values of the PF where these 8 POs are located and the index values of these 8 POs. In this way, the PEI information of the 4 POs belonging to the PF1 is placed in an indication block 1 to an indication block 4 of the DCI according to the index values of these 4 POs; and the PEI information of the 4 POs belonging to the PF2 is placed in an indication block 5 to an indication block 8 of the DCI according to the index values of these 4 POs.

In the PEI detection method provided by this embodiment of this application, the network side device configures the PEI-MO set and the relevant parameters of the PEI-MO set through the configuration parameter. If the overlap exists between the PEI-MOs respectively corresponding to the at least two of the M PEI-Os contained in the PEI-MO set, the PEI information corresponding to the POs associated with the at least two PEI-Os is placed on the first DCI received on the overlapping PEI-MOs according to the first rule, so as to obtain the configuration parameter on the terminal and detect the PEI information of the corresponding POs.

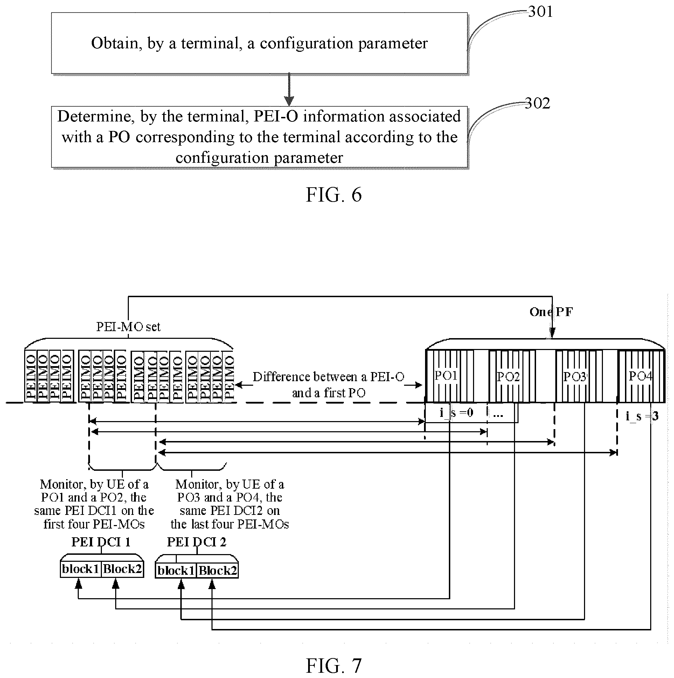

This embodiment of this application provides another paging early indication (PEI) detection method, and as shown in FIG. 6, the PEI detection method provided by this embodiment of this application includes the following step 301 and step 302:
step 301: a terminal obtains a configuration parameter.

The configuration parameter is related to a PEI-O.

Step 302, the terminal determines PEI-O information associated with a PO corresponding to the terminal according to the configuration parameter.

In the PEI detection method provided by this embodiment of this application, after the terminal obtains the configuration parameter, the terminal may determine the PEI-O information associated with the PO corresponding to the terminal according to the configuration parameter. Further, the terminal may detect PEI according to the PEI-O information.

At present, for user equipment (User Equipment, UE) in an idle state, the UE needs to perform radio resource management (Radio Resource Management, RRM) measurement and receive a paging (paging) PDCCH channel. Due to a low probability of the UE being paged at a paging occasion (PO), if the UE performs paging PDCCH channel detection at each paging cycle, unnecessary power consumption will be caused.

In order to reduce the power consumption of the UE, the UE may receive paging early indication information (PEI) before receiving the paging PDCCH. In this way, the UE may judge whether to monitor a subsequent paging PDCCH according to content indicated in the paging early indication (PEI) DCI. If the PEI indicates that the UE does not receive the paging PDCCH, the UE does not need to detect one or more synchronization signal and PBCH blocks (Synchronization Signal and PBCH block, SSB) subsequently, thus saving the power consumption.

Based on the above problems, the terminal needs to determine the PEI-O so as to detect the paging early indication (PEI) associated with the PO corresponding to the terminal.

One PEI-O may indicate the plurality of POs, and the plurality of POs may be all the POs contained in one PF, or some POs in the PF, or the POs in the plurality of PFs.

For the plurality of POs above, this case takes a group of PEI-MO set (which may be understood as one PEI-frame) as a unit, and designs it to be associated with the plurality of PEI-Os. Then, a relevant parameter list is designed for the PEI-MO set. The PEI configuration mode based on the PEI-MO set can make the PEI more centralized and the network configuration simpler, thereby saving signaling overheads.

In one possible embodiment, relevant parameter list of the first occasion set may be configured through a first configuration parameter.

Optionally, the configuration parameter above may be used to configure at least one of the following:
a time-domain resource occupied by the PEI-MO set;
a frequency-domain resource occupied by the PEI-MO set;
the PEI-MO set containing M paging early indication occasions (PEI-Os), where M is a positive integer;
indexes of the M PEI-Os;
the PEI-MO set being associated with W paging occasions (POs), where W is a positive integer;
indexes of the W POs;
a first list corresponding to the PEI-MO set, the first list being used to configure relevant parameters of the M PEI-Os; and
an association relationship between the M PEI-Os and the W POs.

Optionally, the first list above includes M first parameters, and each first parameter of the first parameters is used to indicate a time-domain position of 1st PEI-MO of the PEI-O corresponding to the each first parameter.

Optionally, values of the first parameters above are determined by a reference point, and the reference point includes at least one of the following:
a starting point of the PEI-MO set; and
a 1st PO in at least one PO indicated by PEI-Os corresponding to the first parameters.

Optionally, the association relationship between the M PEI-Os and the W POs above meets:
each of the M PEI-Os above is used to indicate the at least one of the W POs.

Optionally, the number of the POs indicated by each of the M PEI-Os is the same or different, and/or, one PO is only capable of being indicated by one PEI-O.

Optionally, the time-domain resource occupied by the PEI-MO set above is L radio frames, and L is a positive integer.

Optionally, the W POs above are all or part of the POs included in at least one paging frame (PF).

Optionally, each of the M PEI-Os above includes at least one PEI-MO; and
in a case that an overlap exists between the PEI-MOs respectively corresponding to the at least two of the M PEI-Os, first downlink control information (DCI) transmitted on the overlapping PEI-MOs includes: PEI information corresponding to a PO indicated by a first PEI-O; where the first PEI-O is the at least two PEI-Os, and the first DCI is used to carry the PEI.

It may be understood that the first DCI refers to DCI used to carry the PEI. In addition, the first DCI may further be used to carry other indications, such as TRS transmission information, which is not limited here.

Optionally, the PEI information corresponding to the PO indicated by the first PEI-O above is placed in the first DCI according to a first rule, and the first rule includes at least one of the following:
an index value of the first PEI-O;
an index value of the PO indicated by the first PEI-O; and
an index value of a PF where the PO indicated by the first PEI-O is located.

Optionally, the number of the PEI-Os included in the PEI-MO set above is related to at least one of the following:
the number of the POs associated with the PEI-MO set; and
the number of the first parameters contained in the first list corresponding to the PEI-MO set.

Optionally, the specific description of the configuration parameter may refer to the illustration in the above embodiment, which will not be repeated in this embodiment of this application.

Optionally, the PEI-O information above includes at least one of the following:
the PEI-O;
an index of the PEI-O;
a PEI-MO set corresponding to the PEI-O; and
a first parameter corresponding to the PEI-O.

It is to be noted that the above PEI-O refers to the PEI-O associated with the terminal, and "associated" means that the terminal needs to perform PEI (also understood as PEI DCI) monitoring on the PEI-O.

Optionally, the PEI-MO set corresponding to the PEI-O above may include at least one of the following:
a time-domain resource occupied by the PEI-MO set;
a frequency-domain resource occupied by the PEI-MO set;
the PEI-MO set containing the M paging early indication occasions (PEI-Os), where M is a positive integer;
indexes of the M PEI-Os;
the PEI-MO set being associated with W paging occasions (POs), where W is a positive integer;
indexes of the W POs;
a first list corresponding to the PEI-MO set, the first list being used to configure relevant parameters of the M PEI-Os; and
an association relationship between the M PEI-Os and the W POs.

It may be understood that after the terminal determines the PEI-O information according to the obtained configuration parameter, the terminal may know the PDCCH MO of the associated PEI-O according to the PEI-O information, so that the terminal may detect target PEI information on the PDCCH MO above.

Optionally, after the step 302 above, in this embodiment of this application, the PEI detection method provided by this embodiment of this application may further include the following step 303.

Step 303, the terminal detects the target PEI information according to the PEI-O information and a second rule.

The target PEI information is PEI information corresponding to the PO corresponding to the terminal.

The second rule above includes at least one of the following:
an index value of the PO corresponding to the terminal; and
an index value of a PF where the PO corresponding to the terminal is located.

Optionally, the specific description of the PEI-O information may refer to the illustration in the above embodiment, which will not be repeated in this embodiment of this application.

Optionally, in this embodiment of this application, the target PEI information refers to specific prompt content of the target PEI.

Optionally, the target PEI information above is carried on target DCI, and the terminal detects the target DCI on the PEI-O associated with the corresponding PO of the terminal.

Optionally, the target DCI above may be first DCI or other DCI, which is not limited in this embodiment of this application.

It may be understood that in a case that the terminal may monitor the DCI in the time-domain position information of the first PDCCH MO, if the DCI carries the PEI information corresponding to the plurality of POs, the terminal may determine the target PEI information in the specific DCI needing to be detected from the DCI according to the index value of the PO corresponding to the terminal or the index value of the PF where the PO is located, and detect the target PEI information in the DCI.

It is to be noted that after the terminal detects the target PEI information, the terminal may determine whether to monitor subsequent POs according to the target PEI information.

Further, when the target PEI information indicates not to receive paging PDCCH, the terminal will not monitor the PO corresponding to the target PEI subsequently; and when the target PEI information indicates to receive the paging PDCCH, the terminal will monitor the PO corresponding to the target PEI information subsequently.

The PEI detection method provided by this embodiment of this application will be exemplarily illustrated below.

Example 4, as shown in FIG. 7, the network side device is configured with one PEI-MO set (i.e., the PEI-MO set above), and the PEI-MO set is associated with/indicates 4 POs; and the first list corresponding to the PEI-MO includes 4 first parameters, and each PEI-O indicates 2 POs.

In a case that the values of the first parameters are determined by using the plurality of POs as a reference point, if two of the four first parameters have the same value, the overlap will exist between the PEI-MOs corresponding to each PEI-O. In this way, the plurality of POs indicated by each of the plurality of PEI-Os corresponding to the overlapping PEI-MOs need to monitor the same DCI on the same group of PEI-MOs, that is, the first DCI transmitted on the overlapping PEI-MOs includes: PEI information corresponding to the POs indicated by the plurality of PEI-Os. As shown in FIG. 7, if the values of the first parameters corresponding to a PO1 and a PO2 are the same, then the PEI information respectively corresponding to the PO1 and the PO2 is carried in the same DCI1, and the DCI1 is monitored on the same group of PEI-MOs; and PEI information respectively corresponding to a PO3 and a PO4 is carried in the same DCI2, and the DCI2 is monitored on the same group of PEI-MOs.

In this way, if the terminal corresponds to the PO1, then the terminal may detect PEI information (i.e., the target PEI information) corresponding to an indication block 1 in the DCI1 according to an index value i_S corresponding to the PO1 in the PF being equal to 0.

It may be understood that after the terminal detects the target PEI information according to the PEI-O information and the second rule, the terminal may determine whether to perform paging PDCCH detection according to the detected PEI information, without the need to perform paging PDCCH detection by the UE at each paging cycle, thus reducing the power consumption of the terminal.

It is to be noted that an execution subject of the PEI detection method provided by this embodiment of this application may be a PEI detection apparatus, or a control module for executing the PEI detection method in the PEI detection apparatus. This embodiment of this application illustrates the PEI detection apparatus provided by this embodiment of this application by taking an example that the PEI detection apparatus executes the PEI detection method.

In addition, in the related art, due to a configuration that a tracking reference signal CSI-RS/TRS (Tracking Reference Signal) in a current network belongs to a connected state, only UE in the connected state can be supported. If the CSI-RS/TRS serving the UE in the connected state is further configured to UE in an idle state through system information, in a case that a network does not need to continue transmitting a certain CSI-RS/TRS for the UE in the connected state, whether the CSI-RS/TRS of the terminal is transmitted may be indicated through the paging PDCCH or the PEI, so that the network may flexibly control whether the CSI-RS/TRS is transmitted.

In order to reduce the transmission overhead of indication information that the network indicates whether the TRS is transmitted, one method is that the network configures validity time of TRS transmission. That is, in a case that the terminal receives the paging PDCCH indication for TRS transmission or PEI indication for TRS transmission, the terminal cannot assume that the TRS is still transmitted after a first time period, that is, the terminal no longer receives the TRS configured by the system information.

Optionally, a length of the first time period may be a length of N DRX cycles (paging cycles); or, the length of the first time period may be configured by the system information.

A starting moment of the first time period may start from a 1st PF of a current (receiving the paging PDCCH or the PEI) DRX cycle, or a 1st PF of a next DRX cycle.

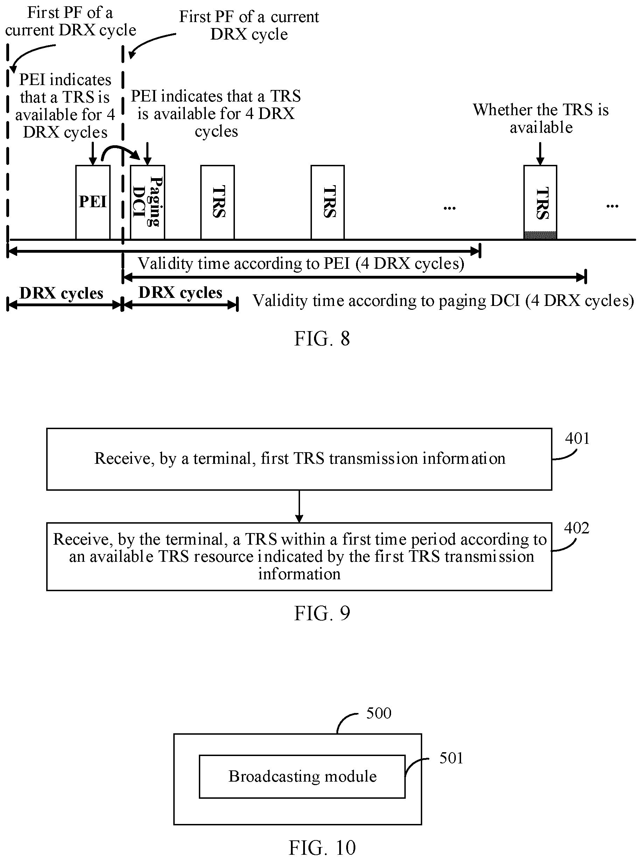

However, as shown in FIG. 8, PEI indicates TRS is available for 4 DRX cycles (PEI indicating TRS is available for 4 DRX cycles). The 1st PF from current DRX cycle determined by validity time (4 DRX cycles according to PEI)is different from which determined by validity time (4 DRX cycles according to paging DCI).. Specifically, The DRX cycle starts with the 1st PF received by paging, and if transmission time of the PEI is before PO, it may be transmitted in the previous DRX cycle of the current DRX cycle, or it may be transmitted in the previous PF of the same DRX cycle. If the transmission time of the PEI is in the previous DRX cycle of the current DRX cycle of the PO, and then if the starting moment of the first time period of the TRS transmission indicated by the paging PDCCH and the PEI is the 1st PF or the next PF of the DRX cycle or the next DRX cycle, it will lead to inconsistent understanding of the validity time of the TRS transmission by the terminal.

In order to solve the above technical problems, in the related art, for the problem that definitions of the starting moment of the first time period corresponding to the TRS transmission information indicated by the paging PDCCH and the starting moment of the first time period corresponding to the TRS transmission information indicated by the PEI are different, this embodiment of this application further provides a reference signal receiving time determining method, so that the definitions of the starting moment of the first time period corresponding to the TRS transmission information indicated by the paging PDCCH and the starting moment of the first time period corresponding to the TRS transmission information indicated by the PEI are consistent.

This embodiment of this application provides a reference signal receiving time determining method, and as shown in FIG. 9, the method includes the following step 401 and step 402.

Step 401: a terminal receives first TRS transmission information.

In one embodiment, the first TRS transmission information is used to activate specific TRS transmission, that is, to indicate that the terminal may receive a specific TRS within a specific time period. The TRS transmission is used for a terminal in an RRC non-connected state. The specific TRS transmission may refer to a specific TRS configuration, which is not limited here.

Step 402, the terminal receives the TRS within a first time period according to an available TRS resource indicated by the first TRS transmission information.

The first TRS transmission information is carried in second DCI, the second DCI includes paging early indication (PEI), and the first time period is a time period corresponding to the first TRS transmission information.

Optionally, a starting moment of the first time period above is one of the following:
a starting moment of a 1st PF of a first DRX cycle, the first DRX cycle being a DRX cycle where a PO associated with the second DCI is located;
a starting moment of a 1st PF of a second DRX cycle, the second DRX cycle being a next DRX cycle of the first DRX cycle;
a starting moment of a first radio frame, the first radio frame being a PF where the PO associated with the second DCI is located;
a starting moment of a first subframe, the first subframe being a subframe with a specific subframe index, and the specific subframe index being configured by a network side; or
a starting moment of a second radio frame, the second radio frame having a specific frame index, and the specific frame index being configured by the network side.

Optionally, a starting moment of the first time period is a starting moment of a second time period, and a length of the first time period is a length of the second time period; where the second time period is a time period corresponding to second TRS transmission information, the second TRS transmission information is carried in DCI of the PO associated with the second DCI, and the DCI of the PO associated with the second DCI is used to page the terminal.

Optionally, the DCI of the PO associated with the second DCI above contains third TRS transmission information.

It is to be noted that the purpose of the third TRS transmission information above is consistent with the purposes of the first TRS transmission information and the second TRS transmission information above.

Optionally, the third TRS transmission information above is the same as the first TRS transmission information.

It may be understood that the similarity that the third TRS transmission information above is the same as the first TRS transmission information refers to the same content. The same content may include: the specific TRS transmission indicated and activated by both is the same, and/or the time period corresponding to the specific TRS transmission indicated and activated by both is the same.

Optionally, the second TRS transmission information above is the same as the first TRS transmission information.

Optionally, the TRS transmission information indicated by a paging PDCCH is the same as the TRS transmission information indicated by PEI.

Exemplarily, if the TRS transmission information is indicated in the paging PDCCH, a starting moment of its corresponding first time period is: a 1st PF of a current DRX cycle, or a 1st PF of a next DRX cycle; and if the TRS transmission information is indicated in the PEI, a starting moment of its corresponding first time period is: a 1st PF of the DRX cycle where a PO associated with the PEI is located, or the 1st PF of the next DRX cycle. Further, the PEI above is used to indicate: whether UE corresponding to the PO associated with the PEI monitors the paging PDCCH (the paging PDCCH indicates the TRS transmission information) on the PO.

In the first time period, the network side device sends the PEI or the paging PDCCH, and the PEI or the paging PDCCH is used to indicate TRS resources to be sent. The terminal may receive the corresponding TRS according to the TRS resources sent according to PEI indication or paging PDCCH indication.

It may be understood that a starting position of the TRS transmission information indicated by the PEI and a starting position of the TRS transmission information indicated by the paging PDCCH transmitted on the PO associated with the PEI are the same, that is, both are the starting moment of the 1st PF of the DRX cycle where the PO carrying the paging PDCCH above is located or the starting moment of the 1st PF of the next DRX cycle.

If the TRS transmission information is indicated in the PEI, the starting moment of the first time period is the starting moment of the PF where the paging PDCCH Occasion (PO) associated with the PEI is located. Preferably, on the PO associated with the PEI, the UE also receives the same TRS transmission information as the PEI.

It may be understood that the starting position of the TRS transmission information indicated by the PEI and the starting position of the TRS transmission information indicated by the paging PDCCH transmitted on the PO associated with the PEI are the same, that is, both are the starting moment of the PF where the PO carrying the paging PDCCH above is located.

If the starting moment of the first time period corresponding to the TRS transmission information in the network configuration is a starting position of a certain subframe or radio frame, the starting position of the TRS transmission information indicated by the PEI and the starting position of the TRS transmission information indicated by the paging PDCCH transmitted on the PO associated with the PEI are the same, that is, both are the starting position of the same subframe or radio frame.

It is to be noted that the association relationship between the PEI and the paging PDCCH in this embodiment is not limited to the association relationship described in other embodiments of the present disclosure, that is, the PEI may indicate whether the paging PDCCH of one PO is monitored, or whether the paging PDCCH of the plurality of POs is monitored, which is not limited in this embodiment.

According to the reference signal receiving time determining method provided by this embodiment of this application, the terminal may receive the corresponding TRS within the first time period according to the available TRS resource indicated by the first TRS transmission information.

It is to be noted that an execution subject of the reference signal receiving time determining method provided by this embodiment of this application may be a reference signal receiving time determining apparatus, or a control module for executing the reference signal receiving time determining method in the reference signal receiving time determining apparatus. This embodiment of this application illustrates the reference signal receiving time determining apparatus provided by this embodiment of this application by taking an example that the reference signal receiving time determining apparatus executes the reference signal receiving time determining method.

This embodiment of this application provides a PEI detection apparatus, and as shown in FIG. 10, the PEI detection apparatus 500 includes: a broadcasting module 501. The broadcasting module 501 is configured to broadcast a configuration parameter related to a PEI-O.

Optionally, the configuration parameter above is used to configure at least one of the following:
a time-domain resource occupied by a PEI-MO set;
a frequency-domain resource occupied by the PEI-MO set;
the PEI-MO set containing M PEI-Os, where M is a positive integer;
indexes of the M PEI-Os;
the PEI-MO set being associated with W POs, where W is a positive integer;
indexes of the W POs;
a first list corresponding to the PEI-MO set, the first list being used to configure relevant parameters of the M PEI-Os; and
an association relationship between the M PEI-Os and the W POs.

Optionally, the first list above includes M first parameters, and each first parameter of the first parameters is used to indicate a time-domain position of 1st PEI-MO of the PEI-O corresponding to the each first parameter.

Optionally, values of the first parameters above are determined by a reference point, and the reference point includes at least one of the following:
a starting point of the PEI-MO set; and
a 1st PO in e at least one PO indicated by PEI-Os corresponding to the first parameters.

Optionally, the association relationship between the M PEI-Os and the W POs meets:
each of the M PEI-Os is used to indicate the at least one of the W POs.

Optionally, the number of the POs indicated by each of the M PEI-Os above is the same or different, and/or, one PO is only capable of being indicated by one PEI-O.

Optionally, the time-domain resource occupied by the PEI-MO set above is L PFs, and L is a positive integer.

Optionally, the W POs above are all or part of the POs included in at least one PF.

Optionally, each of the M PEI-Os above may include at least one PEI-MO; and in a case that an overlap exists between the PEI-MOs respectively corresponding to the at least two of the M PEI-Os, first downlink control information (DCI) transmitted on the overlapping PEI-MOs includes: PEI information corresponding to a PO indicated by a first PEI-O; where the first PEI-O is the at least two PEI-Os, and the first DCI is used to carry the PEI.

Optionally, the PEI information corresponding to the PO indicated by the first PEI-O above is placed in the first DCI according to a first rule, and the first rule includes at least one of the following:
an index value of the first PEI-O;
an index value of the PO indicated by the first PEI-O; and
an index value of a PF where the PO indicated by the first PEI-O is located.

Optionally, the number of the PEI-Os included in the PEI-MO set above is related to at least one of the following:
the number of the POs associated with the PEI-MO set; and
the number of the first parameters contained in the first list corresponding to the PEI-MO set.

In the PEI detection method provided by this embodiment of this application, since the network side device may broadcast the configuration parameter related to the PEI-O, after the terminal obtains the configuration parameter, the terminal may determine the corresponding PEI-O information according to the configuration parameter.

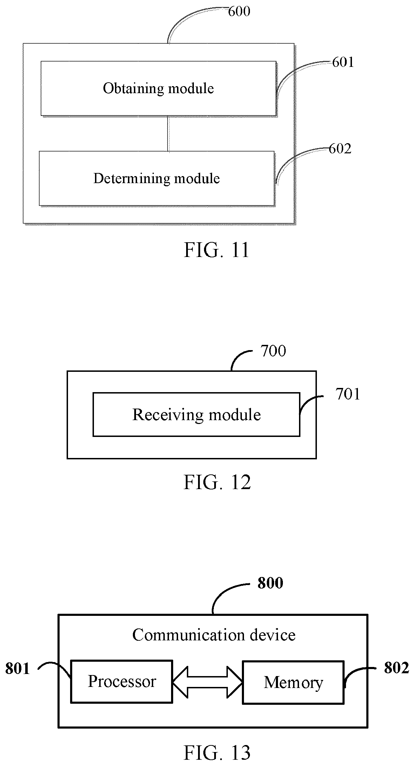

This embodiment of this application provides a PEI detection apparatus, and as shown in FIG. 11, the PEI detection apparatus 600 includes an obtaining module 601 and a determining module 602. The obtaining module 601 is configured to obtain a configuration parameter, the configuration parameter being related to a paging early indication occasion (PEI-O); and the determining module 602 is configured to determine PEI-O information associated with a PO corresponding to a terminal according to the configuration parameter.

Optionally, the PEI detection apparatus further includes a detecting module. The detecting module is configured to detect target PEI information according to a second rule; and
the second rule above includes at least one of the following:
an index value of the PO corresponding to the terminal; and
an index value of a PF where the PO corresponding to the terminal is located.

The target PEI information is PEI information corresponding to the PO corresponding to the terminal.

Optionally, the configuration parameter above is used to configure at least one of the following:
a time-domain resource occupied by a PEI-MO set;
a frequency-domain resource occupied by the PEI-MO set;
the PEI-MO set containing M PEI-Os, where M is a positive integer;
indexes of the M PEI-Os;
the PEI-MO set being associated with W POs, where W is a positive integer;
indexes of the W POs;
a first list corresponding to the PEI-MO set, the first list being used to configure relevant parameters of the M PEI-Os; and
an association relationship between the M PEI-Os and the W POs.

Optionally, the first list above includes M first parameters, and the M first parameters are in one-to-one correspondence with the M PEI-Os; where each first parameter of the first parameters is used to indicate a time-domain position of 1st PEI-MO of the PEI-O corresponding to the each first parameter.

Optionally, values of the first parameters above are determined by a reference point, and the reference point includes at least one of the following:
a starting point of the PEI-MO set; and
a 1st PO in at least one PO indicated by PEI-Os corresponding to the first parameters.

Optionally, the association relationship between the M PEI-Os and the W POs above meets:
each of the M PEI-Os is used to indicate the at least one of the W POs.

Optionally, the number of the POs indicated by each of the M PEI-Os above is the same or different, and/or, one PO is only capable of being indicated by one PEI-O.

Optionally, the PEI-O information above includes at least one of the following:
the PEI-O;
an index of the PEI-O;
a PEI-MO set corresponding to the PEI-O; and
a first parameter corresponding to the PEI-O.

Optionally, each of the M PEI-Os above may include at least one PEI-MO; and in a case that an overlap exists between the PEI-MOs respectively corresponding to the at least two of the M PEI-Os, first DCI received on the overlapping PEI-MOs includes: PEI information corresponding to a PO indicated by a first PEI-O; where the first PEI-O is the at least two PEI-Os, and the first DCI is used to carry the PEI.

In the PEI detection method provided by this embodiment of this application, after the terminal obtains the configuration parameter, the terminal may determine the PEI-O information associated with the PO corresponding to the terminal according to the configuration parameter. Further, the terminal may detect PEI according to the PEI-O information.

This embodiment of this application provides a reference signal receiving time determining apparatus, and as shown in FIG. 12, the apparatus 700 includes a receiving module 701. The receiving module 701 is configured to receive first tracking reference signal (TRS) transmission information; and receive a TRS within a first time period according to an available TRS resource indicated by the first TRS transmission information; where the first TRS transmission information is carried in second DCI, the second DCI includes paging early indication (PEI), and the first time period is a time period corresponding to the first TRS transmission information.

Optionally, a starting moment of the first time period above is one of the following:
a starting moment of a 1st PF of a first DRX cycle, the first DRX cycle being a DRX cycle where a PO associated with the second DCI is located;
a starting moment of a 1st PF of a second DRX cycle, the second DRX cycle being a next DRX cycle of the first DRX cycle;
a starting moment of a first radio frame, the first radio frame being a PF where the PO associated with the second DCI is located;
a starting moment of a first subframe, the first subframe being a subframe with a specific subframe index, and the specific subframe index being configured by a network side; or
a starting moment of a second radio frame, the second radio frame having a specific frame index, and the specific frame index being configured by the network side.

Optionally, a starting moment of the first time period is a starting moment of a second time period, and a length of the first time period is a length of the second time period; where the second time period is a time period corresponding to second TRS transmission information, and the second TRS transmission information is carried in DCI of the PO associated with the second DCI.

Optionally, the DCI of the PO associated with the second DCI above contains third TRS transmission information.

Optionally, the third TRS transmission information above is the same as the first TRS transmission information.

Optionally, the second TRS transmission information above is the same as the first TRS transmission information.

According to the reference signal receiving time determining method provided by this embodiment of this application, the terminal may receive the corresponding TRS within the first time period according to the available TRS resource indicated by the first TRS transmission information.

The PEI detection apparatus or the reference signal receiving time determining apparatus in this embodiment of this application may be an apparatus, an apparatus with an operating system or an electronic device, and may further be a component, an integrated circuit, or a chip in the terminal. The apparatus or the electronic device may be a mobile terminal or may be a non-mobile terminal. Exemplarily, the mobile terminal may include, but is not limited to, types of the terminal 11 listed above. The non-mobile terminal may be a server, a network attached storage (Network Attached Storage, NAS), a personal computer (personal computer, PC), a television (television, TV), a teller machine, or a self-service machine, which is not specifically limited in this embodiment of this application.

The PEI detection apparatus provided by this embodiment of this application can implement various processes implemented in the method embodiments of FIG. 1 to FIG. 7 and achieve the same technical effect, which will not be repeated here to avoid repetitions.

The reference signal receiving time determining apparatus provided by this embodiment of this application can implement various processes implemented in the method embodiments of FIG. 8 to FIG. 9 and achieve the same technical effect, which will not be repeated here to avoid repetitions.

Optionally, as shown in FIG. 13, this embodiment of this application further provides a communication device 800, including a processor 801, a memory 802 and a program or an instruction stored in the memory 802 and executable on the processor 801. For example, when the communication device 800 is a terminal, and when the program or the instruction is executed by the processor 801, various processes of the method embodiment of the PEI detection method or the reference signal receiving time determining method above are implemented, and the same technical effect can be achieved. When the communication device 800 is a network side device, and when the program or the instruction is executed by the processor 801, various processes of the method embodiment of the PEI detection method or the reference signal receiving time determining method above are implemented, and the same technical effect can be achieved, which will not be repeated here to avoid repetitions.

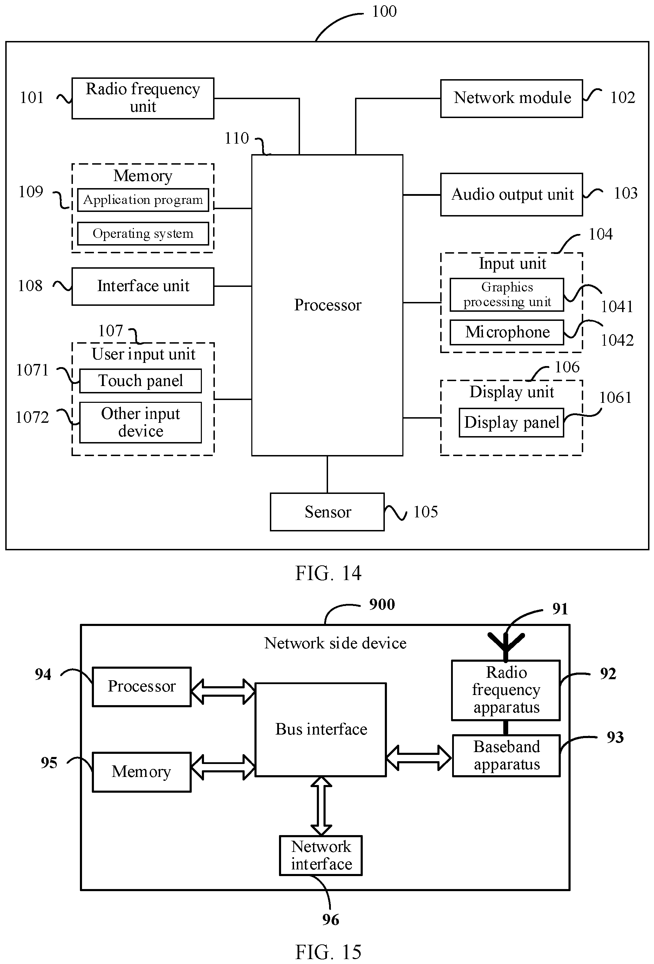

This embodiment of this application further provides a terminal, including a processor and a communication interface. The processor is configured to configure a configuration parameter, and the communication interface is configured to broadcast the configuration parameter to the terminal. The terminal embodiment corresponds to the above method embodiment on a terminal side. Various implementation processes and implementations of the above method embodiments may be applied to the terminal embodiment and can achieve the same technical effect. Specifically, FIG. 14 is a schematic diagram of a hardware structure of a terminal implementing this embodiment of this application.

This embodiment of this application further provides a terminal, including a processor and a communication interface. The communication interface is configured to obtain a configuration parameter; and the processor is configured to determine PEI-O information associated with a PO corresponding to the terminal according to the configuration parameter. The terminal embodiment corresponds to the above method embodiment on a terminal side. Various implementation processes and implementations of the above method embodiments may be applied to the terminal embodiment and can achieve the same technical effect. Specifically, FIG. 14 is a schematic diagram of a hardware structure of a terminal implementing this embodiment of this application.

This embodiment of this application further provides a terminal, including a processor and a communication interface. The communication interface is configured to receive first TRS transmission information; and receive a TRS within a first time period according to an available TRS resource indicated by the first TRS transmission information; where the terminal embodiment corresponds to the above method embodiment on a terminal side. Various implementation processes and implementations of the above method embodiments may be applied to the terminal embodiment and can achieve the same technical effect. Specifically, FIG. 14 is a schematic diagram of a hardware structure of a terminal implementing this embodiment of this application.

The terminal 100 includes, but is not limited to: at least part of components such as a radio frequency unit 101, a network module 102, an audio output unit 103, an input unit 104, a sensor 105, a display unit 106, a user input unit 107, an interface unit 108, a memory 109, and a processor 110.

Those skilled in the art may understand that the terminal 100 may further include a power supply (such as a battery) for supplying power to the components. The power supply may be logically connected with the processor 110 through a power supply management system, thereby implementing functions such as charging, discharging, and power consumption management through the power supply management system. The terminal structure shown in FIG. 14 does not constitute a limitation to the terminal, and the terminal may include more or fewer components than those shown in the figure, or combine some components, or have different component arrangements, which will not be repeated here.

It is to be understood that in this embodiment of this application, the input unit 104 may include a graphics processing unit (Graphics Processing Unit, GPU) 1041 and a microphone 1042. The graphics processing unit 1041 performs processing on image data of a static picture or a video that is obtained by an image acquisition device (such as a camera) in a video acquisition mode or an image acquisition mode. The display unit 106 may include a display panel 1061, and the display panel 1061 may be configured by using a liquid crystal display, an organic light-emitting diode, and other forms. The user input unit 107 includes a touch panel 1071 and other input devices 1072. The touch panel 1071 is also known as a touch screen. The touch panel 1071 may include two parts: a touch detection apparatus and a touch controller. Other input devices 1072 may include, but are not limited to, a physical keyboard, a functional key (such as a volume control key or a switch key), a track ball, a mouse, and a joystick, which are not repeated here.

In this embodiment of this application, the radio frequency unit 101 receives downlink data from the network side device and sends it to the processor 110 for processing; in addition, uplink data is sent to the network side device. Generally, the radio frequency unit 101 includes, but is not limited to, an antenna, at least one amplifier, a transceiver, a coupler, a low noise amplifier, a duplexer, and the like.

The memory 109 may be configured to store a software program or an instruction and various data. The memory 109 may mainly include a storage program or an instruction area and a storage data area. The storage program or the instruction area may store an operating system, an application program or instruction required by at least one function (for example, a sound playback function and an image display function), and the like. In addition, the memory 109 may include a high-speed random-access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory, such as at least one magnetic disk storage device, a flash memory or other non-volatile solid-state storage devices.

The processor 110 may include one or more processing units. Optionally, the processor 110 may integrate an application processor and a modem processor, where the application processor mainly processes an operating system, a user interface, an application program or an instruction, and the like, and the modem processor mainly processes wireless communication, such as a baseband processor. It may be understood that the above modem processor may also not be integrated into the processor 110.

The processor 110 is configured to obtain a configuration parameter, the configuration parameter being related to a PEI-O; and the radio frequency unit 101 is configured to determine PEI-O information associated with a PO corresponding to a terminal according to the configuration parameter.

Optionally, the processor 110 is further configured to detect target PEI information according to the PEI-O information and a second rule.

The second rule above includes at least one of the following:
an index value of the PO corresponding to the terminal; and
an index value of a PF where the PO corresponding to the terminal is located.

The target PEI information is PEI information corresponding to the PO corresponding to the terminal.

Optionally, the configuration parameter above is used to configure at least one of the following:
a time-domain resource occupied by a PEI-MO set;
a frequency-domain resource occupied by the PEI-MO set;
the PEI-MO set containing M PEI-Os, where M is a positive integer;
indexes of the M PEI-Os;
the PEI-MO set being associated with W POs, where W is a positive integer;
indexes of the W POs;
a first list corresponding to the PEI-MO set, the first list being used to configure relevant parameters of the M PEI-Os; and
an association relationship between the M PEI-Os and the W POs.

Optionally, the first list above includes M first parameters, and the M first parameters are in one-to-one correspondence with the M PEI-Os; where each first parameter of the first parameters is used to indicate a time-domain position of 1st PEI-MO of the PEI-O corresponding to the each first parameter.

Optionally, values of the first parameters above are determined by a reference point, and the reference point includes at least one of the following:
a starting point of the PEI-MO set; and
a 1st PO in at least one PO indicated by PEI-Os corresponding to the first parameters.

Optionally, the association relationship between the M PEI-Os and the W POs above includes:
each of the M PEI-Os is used to indicate the at least one of the W POs.

Optionally, the number of the POs indicated by each of the M PEI-Os above is the same or different, and/or, one PO is only capable of being indicated by one PEI-O.

Optionally, the PEI-O information above includes at least one of the following:
the PEI-O;
an index of the PEI-O;
a PEI-MO set corresponding to the PEI-O; and
a first parameter corresponding to the PEI-O.

Optionally, each of the M PEI-Os above may include at least one PEI-MO; and in a case that an overlap exists between the PEI-MOs respectively corresponding to the M PEI-Os, first DCI received on the overlapping PEI-MOs includes: PEI information corresponding to a PO indicated by a first PEI-O; where the first PEI-O is the plurality of PEI-Os corresponding to the overlapping PEI-MOs, and the first DCI is used to carry PEI.

In the PEI detection method provided by this embodiment of this application, after the terminal obtains the configuration parameter, the terminal may determine the PEI-O information associated with the PO corresponding to the terminal according to the configuration parameter. Further, the terminal may detect the PEI according to the PEI-O information.

The radio frequency unit 101 is configured to receive first tracking reference signal (TRS) transmission information; and receive a TRS within a first time period according to an available TRS resource indicated by the first TRS transmission information; where The first TRS transmission information is carried in second DCI, the second DCI includes paging early indication (PEI), and the first time period is a time period corresponding to the first TRS transmission information.

Optionally, a starting moment of the first time period above is one of the following:
a starting moment of a 1st PF of a first DRX cycle, the first DRX cycle being a DRX cycle where a PO associated with the second DCI is located;
a starting moment of a 1st PF of a second DRX cycle, the second DRX cycle being a next DRX cycle of the first DRX cycle;
a starting moment of a first radio frame, the first radio frame being a PF where the PO associated with the second DCI is located;
a starting moment of a first subframe, the first subframe being a subframe with a specific subframe index, and the specific subframe index being configured by a network side; or
a starting moment of a second radio frame, the second radio frame having a specific frame index, and the specific frame index being configured by the network side.

Optionally, a starting moment of the first time period is a starting moment of a second time period, and a length of the first time period is a length of the second time period; where the second time period is a time period corresponding to second TRS transmission information, the second TRS transmission information is carried in DCI of the PO associated with the second DCI, and the DCI of the PO associated with the second DCI is used to page the terminal.

Optionally, the DCI of the PO associated with the second DCI above contains third TRS transmission information.

Optionally, the third TRS transmission information above is the same as the first TRS transmission information.

Optionally, the second TRS transmission information above is the same as the first TRS transmission information.

According to the reference signal receiving time determining method provided by this embodiment of this application, the terminal may receive the corresponding TRS within the first time period according to the available TRS resource indicated by the first TRS transmission information.

This embodiment of this application further provides a network side device, including a processor and a communication interface. The processor is configured to configure a configuration parameter, and the communication interface is configured to broadcast the configuration parameter to a terminal. The network side device embodiment corresponds to the above method embodiment on the network side device. Various implementation processes and implementations of the above method embodiments may be applied to the network side device embodiment and can achieve the same technical effect.

Specifically, this embodiment of this application further provides a network side device. As shown in FIG. 15, the network side device 900 includes: an antenna 91, a radio frequency apparatus 92, and a baseband apparatus 93. The antenna 91 is connected with the radio frequency apparatus 92. In an uplink direction, the radio frequency apparatus 92 receives information through the antenna 91 and sends the received information to the baseband apparatus 93 for processing. In a downlink direction, the baseband apparatus 93 processes the information to be sent and sends the same to the radio frequency apparatus 92. The radio frequency apparatus 92 processes the received information and sends the same out through the antenna 91.

The above frequency band processing apparatus may be located in the baseband apparatus 93, the method executed by the network side device in the above embodiment may be implemented in the baseband apparatus 93, and the baseband apparatus 93 includes a processor 94 and a memory 95.

The baseband apparatus 93 may, for example, include at least one baseband board, a plurality of chips are arranged on the baseband board, and as shown in FIG. 15, one of the chips, for example, is the processor 94, connected with the memory 95 to call a program in the memory 95 and execute a network device operation shown in the above method embodiment.

The baseband apparatus 93 may further include a network interface 96 for exchanging information with the radio frequency apparatus 92, and the interface is, for example, a common public radio interface (common public radio interface, CPRI).

Specifically, the network side device according to the embodiment of the present disclosure further includes: an instruction or a program stored in the memory 95 and executable on the processor 94, where the processor 94 calls the instruction or the program in the memory 95 to execute the method executed by each module shown in FIG. 15, and achieves the same technical effect, which will not be repeated here to avoid repetitions.

This embodiment of this application further provides a readable storage medium, storing a program or an instruction, the program or the instruction, when executed by a processor, implementing various processes of the method embodiments of the PEI detection method or the reference signal receiving time determining method and being capable of achieving the same technical effects, which is not repeated here to avoid repetitions.

The processor is a processor in the terminal in the above embodiment. The readable storage medium includes a computer-readable storage medium, such as a computer read-only memory (Read-Only Memory, ROM), a random access memory (Random Access Memory, RAM), a magnetic disk, or an optical disc.

This embodiment of this application provides another chip, the chip includes a processor and a communication interface, the communication interface is coupled with the processor, the processor is used for running a program or an instruction to implement various processes of the method embodiments of the PEI detection method or the reference signal receiving time determining method and being capable of achieving the same technical effects, which is not repeated here to avoid repetitions.

It is to be understood that the chip mentioned in this embodiment of this application may further be referred to as a system level chip, a system chip, a chip system, or a system on chip.

It is to be noted that terms "including", "containing", or any other variations herein are intended to cover non-exclusive inclusion, such that a process, method, item or apparatus that includes a series of elements not only includes those elements, but also includes other elements that are not explicitly listed, or further includes elements inherent in such the process, method, item or apparatus. Without more limitations, elements defined by a statement "including one" do not exclude the existence of other identical elements in the process, method, item or apparatus that includes the said elements. In addition, it is to be pointed out that the scope of the methods and apparatuses in the implementations of this application is not limited to performing functions in an order shown or discussed, but may further include performing functions in a substantially simultaneous mode or in an opposite order according to the involved functions. For example, the described methods may be executed in a different order from the described ones, and various steps may also be added, omitted, or combined. In addition, features described with reference to certain examples may be combined in other examples.

According to the descriptions in the foregoing implementations, those skilled in the art may clearly learn that the method according to the above embodiment may be implemented by relying on software and a commodity hardware platform or by using hardware. However, in many cases, the former is the better implementation. Based on such an understanding, the technical solutions of this application essentially, or the part contributing to the prior art, may be presented in the form of a computer software product. The computer software product is stored in a storage medium (such as an ROM/RAM, a magnetic disk, or an optical disc) including several instructions to enable a terminal (which may be a mobile phone, a computer, a server, an air conditioner, a network device, or the like) to execute the methods described in all the embodiments of this application.

The embodiments of this application have been described above with reference to the accompanying drawings. However, this application is not limited to the above specific implementations, and the above specific implementations are merely exemplary and not limitative. Those of ordinary skill in the art may make various variations under the teaching of this application without departing from the spirit of this application and the protection scope of the claims, and such variations shall all fall within the protection scope of this application.

## Claims

1. A paging early indication (PEI) detection method, comprising:
broadcasting, by a network side device, a configuration parameter related to a paging early indication occasion (PEI-O).

2. The method according to claim 1, wherein the configuration parameter is used to configure at least one of following:
a time-domain resource occupied by a paging early indication monitoring occasion (PEI-MO) set;
a frequency-domain resource occupied by the PEI-MO set;
the PEI-MO set comprising M PEI-Os, wherein M is a positive integer;
indexes of the M PEI-Os;
the PEI-MO set being associated with W paging occasions (POs), wherein W is a positive integer;
indexes of the W POs;
a first list corresponding to the PEI-MO set, the first list being used to configure relevant parameters of the M PEI-Os; and
an association relationship between the M PEI-Os and the W POs.

3. The method according to claim 2, wherein the first list comprises M first parameters, and each first parameter of the first parameters is used to indicate a time-domain position of 1st PEI-MO of the PEI-O corresponding to the each first parameter.

4. The method according to claim 3, wherein values of the first parameters are determined by a reference point, and the reference point comprises at least one of following:
a starting point of the PEI-MO set; and
a 1st PO in at least one PO indicated by PEI-Os corresponding to the first parameters.

5. The method according to claim 2, wherein the association relationship between the M PEI-Os and the W POs meets:
each of the M PEI-Os is used to indicate at least one of the W POs.

6. The method according to claim 5, wherein the number of POs indicated by each of the M PEI-Os is same or different, and/or, one PO is only capable of being indicated by one PEI-O.

7. The method according to claim 2, wherein the time-domain resource occupied by the PEI-MO set is L radio frames, and L is a positive integer.

8. The method according to claim 2, wherein the W POs are all or part of POs comprised in at least one paging frame (PF).

9. The method according to claim 2, wherein each of the M PEI-Os comprises at least one PEI-MO; and
in a case that an overlap exists between PEI-MOs respectively corresponding to at least two of the M PEI-Os, first downlink control information (DCI) transmitted on overlapping PEI-MOs comprises: PEI information corresponding to a PO indicated by a first PEI-O; wherein
the first PEI-O is the at least two PEI-Os, and the first DCI is used to carry PEI.

10. The method according to claim 9, wherein the PEI information corresponding to the PO indicated by the first PEI-O is placed in the first DCI according to a first rule, and the first rule comprises at least one of following:
an index value of the first PEI-O;
an index value of the PO indicated by the first PEI-O; and
an index value of a PF where the PO indicated by the first PEI-O is located.

11. The method according to claim 3, wherein
the number of the PEI-Os comprised in the PEI-MO set is related to at least one of following:
the number of the POs associated with the PEI-MO set; and
the number of the first parameters comprised in the first list corresponding to the PEI-MO set.

12. A paging early indication (PEI) detection method, further comprising:
obtaining, by a terminal, a configuration parameter, the configuration parameter being related to a PEI-O; and
determining, by the terminal, PEI-O information associated with a PO corresponding to the terminal according to the configuration parameter.

13. The method according to claim 12, further comprising:
detecting, by the terminal, target PEI information, according to the PEI-O information and a second rule;
the second rule comprising at least one of following:
an index value of the PO corresponding to the terminal; and
an index value of a PF where the PO corresponding to the terminal is located; wherein
the target PEI information is PEI information corresponding to the PO corresponding to the terminal.

14. The method according to claim 12, wherein the configuration parameter is used to configure at least one of following:
a time-domain resource occupied by a PEI-MO set;
a frequency-domain resource occupied by the PEI-MO set;
the PEI-MO set comprising M PEI-Os, wherein M is a positive integer;
indexes of the M PEI-Os;
the PEI-MO set being associated with W POs, wherein W is a positive integer;
indexes of the W POs;
a first list corresponding to the PEI-MO set, the first list being used to configure relevant parameters of the M PEI-Os; and
an association relationship between the M PEI-Os and the W POs.

15. The method according to claim 14, wherein the first list comprises M first parameters, and the M first parameters are in one-to-one correspondence with the M PEI-Os; wherein
each first parameter of the first parameters is used to indicate a time-domain position of 1st PEI-MO of the PEI-O corresponding to the each first parameter.

16. The method according to claim 15, wherein values of the first parameters are determined by a reference point, and the reference point comprises at least one of following:
a starting point of the PEI-MO set; and
a 1st PO in at least one PO indicated by the PEI-Os corresponding to the first parameters.

17. The method according to claim 14, wherein the association relationship between the M PEI-Os and the W POs meets:
each of the M PEI-Os is used to indicate at least one of the W POs.

18. The method according to claim 17, wherein the number of POs indicated by each of the M PEI-Os is same or different, and/or, one PO is only capable of being indicated by one PEI-O.

19. The method according to any one of claims 12 to 18, wherein the PEI-O information comprises at least one of following:
the PEI-O;
an index of the PEI-O;
a PEI-MO set corresponding to the PEI-O; and
a first parameter corresponding to the PEI-O.

20. The method according to claim 14, wherein each of the M PEI-Os comprises at least one PEI-MO; and
in a case that an overlap exists between PEI-MOs respectively corresponding to at least two of the M PEI-Os, first DCI received on overlapping PEI-MOs comprises: PEI information corresponding to a PO indicated by a first PEI-O; wherein
the first PEI-O is the at least two PEI-Os, and the first DCI is used to carry PEI.

21. A reference signal receiving time determining method, comprising:
receiving, by a terminal, first tracking reference signal (TRS) transmission information; and
receiving, by the terminal, a TRS within a first time period, according to an available TRS resource indicated by the first TRS transmission information; wherein
the first TRS transmission information is carried in second DCI, the second DCI comprises paging early indication (PEI), and the first time period is a time period corresponding to the first TRS transmission information.

22. The method according to claim 21, wherein a starting moment of the first time period is one of following:
a starting moment of a 1st PF of a first DRX cycle, the first DRX cycle being a DRX cycle where a PO associated with the second DCI is located;
a starting moment of a 1st PF of a second DRX cycle, the second DRX cycle being a next DRX cycle of the first DRX cycle;
a starting moment of a first radio frame, the first radio frame being a PF where the PO associated with the second DCI is located;
a starting moment of a first subframe, the first subframe being a subframe with a specific subframe index, and the specific subframe index being configured by a network side; or
a starting moment of a second radio frame, the second radio frame having a specific frame index, and the specific frame index being configured by the network side.

23. The method according to claim 21, wherein a starting moment of the first time period is a starting moment of a second time period, and a length of the first time period is a length of the second time period; wherein
the second time period is a time period corresponding to second TRS transmission information, the second TRS transmission information is carried in DCI of a PO associated with the second DCI, and the DCI of the PO associated with the second DCI is used to page the terminal.

24. The method according to claim 23, wherein the DCI of the PO associated with the second DCI contains third TRS transmission information.

25. The method according to claim 24, wherein the third TRS transmission information is same as the first TRS transmission information.

26. The method according to claim 23, wherein the second TRS transmission information is same as the first TRS transmission information.

27. A paging early indication (PEI) detection apparatus, comprising:
a broadcasting module, configured to broadcast a configuration parameter related to a paging early indication occasion (PEI-O).

28. The apparatus according to claim 27, wherein the configuration parameter is used to configure at least one of following:
a time-domain resource occupied by a PEI-MO set;
a frequency-domain resource occupied by the PEI-MO set;
the PEI-MO set comprising M PEI-Os, wherein M is a positive integer;
indexes of the M PEI-Os;
the PEI-MO set being associated with W POs, wherein W is a positive integer;
indexes of the W POs;
a first list corresponding to the PEI-MO set, the first list being used to configure relevant parameters of the M PEI-Os; and
an association relationship between the M PEI-Os and the W POs.

29. The apparatus according to claim 28, wherein the first list comprises M first parameters, and each first parameter of the first parameters is used to indicate a time-domain position of 1st paging early indication monitoring occasion PEI-MO of the PEI-O corresponding to the each first parameter.

30. The apparatus according to claim 29, wherein values of the first parameters are determined by a reference point, and the reference point comprises at least one of following:
a starting point of the PEI-MO set; and,
a 1st PO in at least one PO indicated by PEI-Os corresponding to the first parameters.

31. The apparatus according to claim 28, wherein the association relationship between the M PEI-Os and the W POs meets:
each of the M PEI-Os is used to indicate at least one of the W POs.

32. The apparatus according to claim 31, wherein the number of POs indicated by each of the M PEI-Os is same or different, and/or, one PO is only capable of being indicated by one PEI-O.

33. The apparatus according to claim 28, wherein the time-domain resource occupied by the PEI-MO set is L radio frames, and L is a positive integer.

34. The apparatus according to claim 28, wherein the W POs are all or part of POs comprised in at least one PF.

35. The apparatus according to claim 28, wherein each of the M PEI-Os comprises at least one PEI-MO; and
in a case that an overlap exists between PEI-MOs respectively corresponding to at least two of the M PEI-Os, first downlink control information (DCI) transmitted on overlapping PEI-MOs comprises: PEI information corresponding to a PO indicated by a first PEI-O; wherein
the first PEI-O is the at least two PEI-Os, and the first DCI is used to carry PEI.

36. The apparatus according to claim 35, wherein the PEI information corresponding to the PO indicated by the first PEI-O is placed in the first DCI according to a first rule, and the first rule comprises at least one of following:
an index value of the first PEI-O;
an index value of the PO indicated by the first PEI-O; and
an index value of a PF where the PO indicated by the first PEI-O is located.

37. The apparatus according to claim 29, wherein
the number of the PEI-Os comprised in the PEI-MO set is related to at least one of following:
the number of the POs associated with the PEI-MO set; and
the number of the first parameters comprised in the first list corresponding to the PEI-MO set.

38. A paging early indication (PEI) detection apparatus, comprising an acquiring module and a determining module; wherein
the obtaining module is configured to obtain a configuration parameter, the configuration parameter being related to a PEI-O; and
the determining module is configured to determine PEI-O information associated with a PO corresponding to a terminal according to the configuration parameter.

39. The apparatus according to claim 38, wherein the PEI detection apparatus further comprises:
a detecting module, configured to detect target PEI information according to the PEI-O information and a second rule; and
the second rule comprises at least one of following:
an index value of the PO corresponding to the terminal; and
an index value of a PF where the PO corresponding to the terminal is located; wherein
the target PEI information is PEI information corresponding to the PO corresponding to the terminal.

40. The apparatus according to claim 38, wherein the configuration parameter is used to configure at least one of following:
a time-domain resource occupied by a PEI-MO set;
a frequency-domain resource occupied by the PEI-MO set;
the PEI-MO set comprising M PEI-Os, wherein M is a positive integer;
indexes of the M PEI-Os;
the PEI-MO set being associated with W POs, wherein W is a positive integer;
indexes of the W POs;
a first list corresponding to the PEI-MO set, the first list being used to configure relevant parameters of the M PEI-Os; and
an association relationship between the M PEI-Os and the W POs.

41. The apparatus according to claim 40, wherein the first list comprises M first parameters, and the M first parameters are in one-to-one correspondence with the M PEI-Os; wherein
each first parameter of the first parameters is used to indicate a time-domain position of 1st PEI-MO of the PEI-O corresponding to the each first parameter.

42. The apparatus according to claim 41, wherein values of the first parameters are determined using a starting point of the PEI-MO set as a reference point; or values of the first parameters are determined using a 1st PO in at least one PO indicated by the corresponding PEI-Os as a reference point.

43. The apparatus according to claim 40, wherein the association relationship between the M PEI-Os and the W POs comprises:.
each of the M PEI-Os is used to indicate at least one of the W POs.

44. The apparatus according to claim 43, wherein the number of POs indicated by each of the M PEI-Os is same or different, and/or, one PO is only capable of being indicated by one PEI-O.

45. The apparatus according to any one of claims 38 to 44, wherein the PEI-O information comprises at least one of following:
the PEI-O;
an index of the PEI-O;
a PEI-MO set corresponding to the PEI-O; and
a first parameter corresponding to the PEI-O.

46. The apparatus according to claim 40, wherein each of the M PEI-Os comprises at least one PEI-MO; and
in a case that an overlap exists between PEI-MOs respectively corresponding to at least two of the M PEI-Os, first DCI received on overlapping PEI-MOs comprises: PEI information corresponding to a PO indicated by a first PEI-O; wherein
the first PEI-O is the at least two PEI-Os, and the first DCI is used to carry PEI.

47. A reference signal receiving time determining apparatus, comprising:
a receiving module, configured to receive first tracking reference signal (TRS) transmission information;
the receiving module being further configured to receive a TRS within a first time period according to an available TRS resource indicated by the first TRS transmission information; wherein
the first TRS transmission information is carried in second DCI, the second DCI comprises paging early indication (PEI), and the first time period is a time period corresponding to the first TRS transmission information.

48. The apparatus according to claim 47, wherein a starting moment of the first time period is one of following:
a starting moment of a 1st PF of a first DRX cycle, the first DRX cycle being a DRX cycle where a PO associated with the second DCI is located;
a starting moment of a 1st PF of a second DRX cycle, the second DRX cycle being a next DRX cycle of the first DRX cycle;
a starting moment of a first radio frame, the first radio frame being a PF where the PO associated with the second DCI is located;
a starting moment of a first subframe, the first subframe being a subframe with a specific subframe index, and the specific subframe index being configured by a network side; or
a starting moment of a second radio frame, the second radio frame having a specific frame index, and the specific frame index being configured by the network side.

49. The apparatus according to claim 47, wherein a starting moment of the first time period is a starting moment of a second time period, and a length of the first time period is a length of the second time period; wherein
the second time period is a time period corresponding to second TRS transmission information, the second TRS transmission information is carried in DCI of a PO associated with the second DCI, and the DCI of the PO associated with the second DCI is used to page the terminal.

50. The apparatus according to claim 49, wherein the DCI of the PO associated with the second DCI contains third TRS transmission information.

51. The apparatus according to claim 50, wherein the third TRS transmission information is same as the first TRS transmission information.

52. The apparatus according to claim 49, wherein the second TRS transmission information is same as the first TRS transmission information.

53. A terminal, comprising a processor, a memory, and a program or an instruction stored in the memory and executable on the processor, wherein when the program or the instruction is executed by the processor, steps of the PEI detection method according to any one of claims 12 to 20 are implemented, or steps of the reference signal receiving time determining method according to any one of claims 21 to 26 are implemented.

54. A network side device, comprising a processor, a memory, and a program or an instruction stored in the memory and executable on the processor, wherein when the program or the instruction is executed by the processor, steps of the PEI detection method according to any one of claims 1 to 11are implemented.

55. A readable storage medium, wherein the readable storage medium stores a program or an instruction, and when the program or the instruction is executed by a processor, steps of the PEI detection method according to any one of claims 1 to 11 are implemented, or steps of the PEI detection method according to any one of claims 12 to 20 are implemented, or steps of the reference signal receiving time determining method according to any one of claims 21 to 26 are implemented.
